# EUROPÄISCHE PATENTSCHRIFT

(11) **EP 3 387 369 B1**
(45) Veröffentlichungstag und Bekanntmachung des Hinweises auf die Patenterteilung: **09.10.2019**
(21) Anmeldenummer: 16819446.2
(22) Anmeldetag: 08.12.2016
(51) Int. Cl.: G01B 11/00, G01S 17/42, G01S 17/89, G01B 11/24

(54) **VERFAHREN ZUM VERMESSEN EINER KONTUR EINES KÖRPERS ODER ZUM ÜBERPRÜFEN VON DESSEN LAGERUNG UM EINE ROTATIONSACHSE**
METHOD FOR MEASURING A CONTOUR OF A BODY OR FOR CHECKING THE POSITION THEREOF ABOUT AN AXIS OF ROTATION
PROCÉDÉ DE MESURE DU CONTOUR D'UN CORPS OU DE VÉRIFICATION DE SON MONTAGE AUTOUR D'UN AXE DE ROTATION

(30) Priorität: 10.12.2015 DE 102015224893
(43) Veröffentlichungstag der Anmeldung: 17.10.2018
(73) Patentinhaber: SMS Group GmbH, 40237 Düsseldorf (DE)
(72) Erfinder: FLECK, Thomas Konrad, 51107 Köln (DE); SCHULTE, Jascha, 58091 Hagen (DE)
(74) Vertreter: Klüppel, Walter
(86) Internationale Anmeldenummer: PCT/EP2016/080350
(87) Internationale Veröffentlichungsnummer: WO 2017/097944

(56) Entgegenhaltungen:
- EP-A1- 2 662 662
- EP-A2- 2 648 016
- DE-A1-102011 089 335
- US-A1- 2014 096 405
- MARTIN FRIEDRICH ET AL: "3D-Koordinatenmesstechnik fuer die Kokillen- und Segmentwerkstatt", STAHL UND EISEN, VERLAG STAHLEISEN, DUSSELDORF, DE, Bd. 2, Januar 2011 (2011-01), Seiten 39-45, XP009170331, ISSN: 0340-4803

## Beschreibung

Die Erfindung betrifft ein Verfahren zum Vermessen der Kontur eines Körpers nach dem Oberbegriff von Anspruch 1, und ein Verfahren zum Überprüfen der Lagerung eines Körpers um eine Rotationsachse nach dem Oberbegriff von Anspruch 2. Die Vorrichtung und die nachfolgend beschriebenen Ausführungsformen der Vorrichtung werden nicht beansprucht.

Nach dem Stand der Technik ist es bekannt, Abstände und/oder sich aus diesen Abständen ergebende Ausrichtungen von Messobjekten bzw. Körper mittels eines sogenannten Lasertrackers zu messen, z.B. aus DE 10 2011 089 335 A1. Die genaue Vorgehensweise für die Abstandsmessung und Ausrichtung mit einem Lasertracker ist beispielsweise in dem Artikel "3D-Koordinatenmesstechnik für die Kokillen- und Segmentwerkstatt" von Martin Friedrich, Horst von Wyl, Peter Müller, Georg Grundmann, David Gaczek und Friedrich Hellweg in Stahl und Eisen 131 (2011), Nr. 2, Seiten 39-45 beschrieben. Mit Hilfe eines solchen Lasertrackers kann die dreidimensionale Koordinatenmesstechnik bereits erfolgreich in großen Industriebereichen eingesetzt werden, z.B. zur korrekten Ausrichtung von Kokillen oder Segmenten von Stranggießanlagen.

Der Einsatz eines Lasertrackers zum Vermessen von Körpern bzw. Messobjekten erfolgt herkömmlich in der Weise, dass eine zugehörige Messkugel von einer Bedienperson auf eine Oberfläche eines zu vermessenden Körpers aufgesetzt wird, wobei dann der von dem Messkopf des Lasertrackers ausgesendete Laserstrahl von der Messkugel eingefangen und zurück zum Messkopf reflektiert wird. Nach Abschluss einer Messung und vor Durchführung einer weiteren Messung ist die Messkugel von der Bedienperson manuell an einer anderen Stelle der Oberfläche des Körpers aufzubringen. Das manuelle Aufbringen der Messkugel auf einer Oberfläche des Körpers durch die Bedienperson hat den Nachteil eines großen Aufwands und kann z.B. beim Vermessen eines sog. Rollenschlags nicht hinreichend präzise sein.

Aus US 2014/0096405 ist ein gattungsgemäßes Verfahren nach dem Oberbegriff von Anspruch 1 bekannt.

Aus EP 2 648 016 B1 ist es bekannt, einen Flugzeugrumpf mittels eines umlaufenden Laser-Crawlers zu überprüfen, indem der Laser-Crawler entlang einer gekrümmt geformten Kante des Flugzeugrumpfes an einer offenen Stirnseite davon entlangfährt und dabei eine Datenmenge bezüglich des Umfangs des Flugzeugrumpfes erlangt. Der Laser-Crawler ist in Form eines automatisierten motorisierten Laufwagens mit einer Mehrzahl von Rädern bzw. Rollen ausgebildet, wobei an dem Laufwagen ein Reflektor eines Lasertracker-Systems angebracht ist. Während der Vermessung des Flugzeugrumpfes verbleibt dieser in Ruhe und bewegt sich nicht.

Aus EP 2 662 662 A1 sind eine Vorrichtung und ein Verfahren zum Messen von Form-, Lage- und Dimensionsmerkmalen an Maschinenelementen bekannt. Zu diesem Zweck wird ein Maschinenelement in eine Werkstückhalterung der Vorrichtung eingespannt, und dabei um eine Rotationsachse gedreht. Die Vorrichtung umfasst eine optische Messeinheit und eine mechanische Messeinheit, wobei mit diesen Messeinheiten ein Vermessen des Maschinenelements vorgenommen wird. Ein Lasertracker-System kommt hierbei nicht zum Einsatz.

Nach dem Stand der Technik ist es auch bekannt, eine Vermessung und Überprüfung von Körpern, beispielsweise Kokillen oder Segmente, mit mechanischen Messmitteln, z.B. Schablonen, Lineale oder dergleichen, durchzuführen. Hierbei besteht ein Nachteil darin, dass solche Schablonen bzw. Lineale vergleichsweise schwer sind und schwierig zu handhaben sind. Des Weiteren unterliegen solche Messmittel einem Verschleiß und der Gefahr von möglichen Beschädigungen, so dass die Notwendigkeit einer turnusmäßigen Überprüfung besteht.

Entsprechend besteht eine Aufgabe der vorliegenden Erfindung darin, das Vermessen der Kontur eines Körpers oder ein Überprüfen von dessen Lagerung um eine Rotationsachse mit preiswerten Mitteln zu optimieren und einfacher auszugestalten.

Diese Aufgabe wird durch ein Verfahren mit den Merkmalen von Anspruch 1, und durch ein Verfahren mit den Merkmalen von Anspruch 2 gelöst. Vorteilhafte Weiterbildungen der Erfindung sind in den abhängigen Ansprüchen definiert.

Ein Verfahren nach der vorliegenden Erfindung dient zum Vermessen der Kontur eines Körpers, wobei ein Lasertracker-System mit einer Messkugel, einem Messkopf und einer Auswerteeinrichtung eingesetzt wird. Während des Vermessens der Kontur des Körpers bzw. bei Durchführung des Verfahrens wird der Körper um zumindest eine Rotationsachse in Rotation versetzt, wobei dabei die Messkugel des Lasertracker-Systems einer Umfangsfläche des Körpers nachfolgt und ein von dem Messkopf ausgesendeter Laserstrahl von der Messkugel zurück zu dem Messkopf reflektiert wird, wobei auf Grundlage dessen dann mittels der Auswerteeinrichtung die Kontur des Körpers bestimmt wird. Die Messkugel befindet sich mit der Umfangsfläche des Körpers unmittelbar in Kontakt, um der Umfangsfläche des Körpers bei dessen Rotation nachzufolgen.

In gleicher Weise betrifft die Erfindung auch ein Verfahren zum Überprüfen der Lagerung eines Körpers um eine Rotationsachse, bei dem ein Lasertracker-System mit einer Messkugel, einem Messkopf und einer Auswerteeinrichtung eingesetzt wird, wobei der Körper um die Rotationsachse in Rotation versetzt wird und dabei die Messkugel einer Umfangsfläche des Körpers nachfolgt, wobei ein Laserstrahl von der Messkugel zurück zu dem Messkopf reflektiert und auf Grundlage dessen mittels der Auswerteeinrichtung die Lagerung des Körpers um die Rotationsachse bestimmt wird. Die Messkugel befindet sich mit der Umfangsfläche des Körpers unmittelbar in Kontakt, um der Umfangsfläche des Körpers bei dessen Rotation nachzufolgen.

Der Erfindung liegt die wesentliche Erkenntnis zugrunde, dass sich das zugehörige Verfahren insbesondere zum Vermessen der Kontur eines Körpers eignet, der um zumindest eine Achse rotationssymmetrisch ist, oder zur Überprüfung der Lagerung eines Körpers um eine Rotationsachse eingesetzt werden kann, wobei dann der Körper nicht zwingend rotationssymmetrisch sein muss. In jedem Fall wird hierbei der zu vermessende bzw. zu überprüfende Körper um die Rotationsachse in Rotation versetzt, wobei während der Rotation des Körpers um die Rotationsachse sich die Messkugel unmittelbar in Kontakt mit einer Umfangsfläche des Körpers befindet. Entsprechend kann dann durch eine Messung der 3D-Koordinaten der Messkugel und deren Bewegung während der Rotation des Körpers ein Rückschluss auf die Kontur des Körpers bzw. auf Genauigkeit der Rotationsachse gewonnen werden.

Mittels der Erfindung ist es möglich, wie erläutert die Kontur eines Körpers zu vermessen. Falls es sich bei der Kontur um eine Außenumfangsfläche des Körpers handelt, wird während der Rotation des Körpers um die Rotationsachse die Messkugel in Kontakt mit einer Außenumfangsfläche des Körpers gebracht und folgt dieser nach. Demgegenüber kann es sich bei der Kontur auch um eine Innenumfangsfläche eines z.B. hohlen Körpers in Form eines Rohrs, einer Rolle oder dergleichen handeln, wobei dann die Messkugel - während der Rotation des Körpers um die Rotationsachse - in Kontakt mit der Innenumfangsfläche des Körpers gebracht wird und dieser nachfolgt.

Mit einem Verfahren nach der vorliegenden Erfindung ist es möglich, auch Körper zu vermessen, die z.B. in Bezug zu einer Mittenachse "unrund" sind, wie etwa eine defekte Rolle, eine Nocke oder dergleichen. Wesentlich hierbei ist, dass diese Körper um eine Rotationsachse in Rotation versetzt werden, wobei wie erläutert die Messkugel unmittelbar in Kontakt mit der Umfangsfläche des Körpers bleibt, um hierdurch einen Rückschluss auf die Kontur des Körpers oder die Genauigkeit der Rotationsachse zu gewinnen.

Falls es sich bei dem zu vermessenden Körper beispielsweise um eine Segmentrolle einer Stranggießanlage handelt, kann mit dem obigen Verfahren nach der vorliegenden Erfindung mit hoher Präzision ein möglicher Rollenschlag der Segmentrolle gemessen werden, wenn die Segmentrolle um eine Achse, vorzugsweise um ihre Längsachse, in Rotation versetzt wird und dabei die Messkugel der Außenumfangsfläche der Segmentrolle nachfolgt, nämlich durch einen unmittelbaren Kontakt mit der Außenumfangsfläche. Diesbezüglich ist von Vorteil, dass eine solche Segmentrolle nicht aus dem zugehörigen Segmentrahmen ausgebaut wird, sondern für die Zwecke der vorliegenden Erfindung um genau die Rotationsachse in Rotation versetzt wird, um die sie auch während des Betriebs der Stranggießanlage rotiert. Entsprechend kann hierdurch auch die Genauigkeit der Lagerung der Segmentrolle in dem zugeordneten Segmentrahmen überprüft werden.

Zur Durchführung eines Verfahrens nach der vorliegenden Erfindung kann die Messkugel an einem Auslegerarm einer Führungseinrichtung angebracht sein, wobei der Auslegerarm relativ zu dem Körper beweglich gelagert ist. Eine solche Anbringung der Messkugel an dem Auslegerarm führt zu dem Vorteil, dass die Messkugel nicht länger von einer Bedienperson bzw. von Hand mit der Außenumfangsfläche des Körpers in Kontakt zu bringen ist, wodurch der Aufwand minimiert und die Messpräzision verbessert werden. Die bewegliche Lagerung des Auslegerarms kann über ein Drehlager erfolgen, wobei der Auslegerarm um eine Achse, die parallel oder quer zur Rotationsachse des Körpers ist, schwenkbeweglich ist. Ergänzend und/oder alternativ kann der Auslegerarm an einem Linear-Führungslager angebracht sein, wodurch eine Bewegung des Auslegerarms relativ zu dem Körper möglich ist.

Zur Durchführung eines Verfahrens nach der vorliegenden Erfindung kann ein Auslegerarm in Richtung des Körpers mit einer Kraft beaufschlagt sein, beispielsweise durch sein Eigengewicht oder mittels einer Federeinrichtung oder dergleichen, die auf den Auslegerarm eine Vorspannung in Richtung des Körpers ausübt. Eine solche Vorspannung kann entweder um eine Achse, um die der Auslegerarm schwenkbeweglich ist, ausgeübt oder in einer Linearführung, an dem der Auslegerarm angebracht ist, realisiert werden. In Folge dessen bleiben dann die Messkugel oder der Auslegerarm bei einer Rotation des Körpers um die Rotationsachse stets in Kontakt mit dessen Umfangsfläche. Anders ausgedrückt, wird durch eine solche Ausgestaltung des Auslegerarms ein Abheben der Messkugel oder des Auslegerarms von einer Umfangsfläche des Körpers bei dessen Rotation um die Rotationsachse verhindert, und somit ein präzises Vermessen des Körpers entlang seiner gesamten Umfangsfläche sichergestellt.

Zur Durchführung eines Verfahrens nach der vorliegenden Erfindung kann ein Auslegerarm, an dem die Messkugel angebracht ist, bezüglich des Körpers automatisch verstellt werden, nämlich zu dem Zweck, dass mit der an dem Auslegerarm angebrachten Messkugel eine Umfangsfläche des Körpers auch entlang seiner Längserstreckung vermessen wird. Alternativ kann eine solche Verstellung des Auslegerarms auch manuell erfolgen. Die Verstellung der Positionierung des Auslegerarms relativ zu dem Körper kann schwenkbeweglich um eine Achse parallel oder quer zur Rotationsachse erfolgen, oder translatorisch in einer Richtung parallel zur Rotationsachse.

Für eine hohe Präzision der Vermessung des Körpers ist es von Vorteil, wenn der Körper hierbei um die Rotationsachse maschinentechnisch in Rotation versetzt wird. Zu diesem Zweck können geeignete Mittel eingesetzt werden, beispielsweise Reibräder, Rollen oder dergleichen, die motorisch angetrieben werden und in Kontaktanlage mit einer Umfangsfläche des Körpers gebracht werden können, zwecks Rotation des Körpers um die Rotationsachse.

Zur Durchführung eines Verfahrens nach der vorliegenden Erfindung kann ein Messprotokoll für den Körper in Bezug auf verschiedene Abschnitte seiner Umfangsfläche automatisch erstellt werden. Dies ist insbesondere dann von Vorteil, wenn wie vorstehend erläutert der Auslegerarm bezüglich des Körpers parallel zu der Achse, um die der Körper in Rotation versetzt wird, automatisch verstellt bzw. verschwenkt wird. Entsprechend wird in dem Messprotokoll dann eine gesamte Kontur des Körpers berücksichtigt und abgespeichert. Das automatische Generieren eines Messprotokolls führt auch vorteilhaft zu einem erheblichen Zeitgewinn bei dem Vermessen der Aussenkontur eines Körpers oder bei der Überprüfung von dessen Lagerung um eine Rotationsachse

Zur Durchführung eines Verfahrens nach der vorliegenden Erfindung ist eine Vorrichtung vorgesehen, die zum Vermessen einer Kontur eines Körpers oder zum Überprüfen der Lagerung eines Körpers um eine Rotationsachse unter Verwendung eines Lasertracker-Systems dient. Diese Vorrichtung umfasst eine Führungseinrichtung, an der eine Messkugel des Lasertracker-Systems angebracht ist, wobei die Führungseinrichtung derart eingerichtet ist, dass die Messkugel bei einer Rotation des Körpers einer Umfangsfläche des Körpers nachfolgt. Zu diesem Zweck kann die Führungseinrichtung einen Auslegerarm aufweisen, an dem die Messkugel angebracht ist, vorzugsweise an einem freien Ende des Auslegerarms. Zwecks eines Nachfolgens der Umfangsfläche des Körpers bei dessen Rotation kann die Messkugel in unmittelbaren Kontakt mit der Umfangsfläche des Körpers gebracht werden. Dies bedeutet, dass bei einem unmittelbaren Kontakt die Messkugel selber die Umfangsfläche des Körpers berührt und somit bei einer Rotation des Körpers dessen Umfangsfläche nachfolgt.

Zur Durchführung eines Verfahrens nach der vorliegenden Erfindung kann der Auslegerarm an einem Drehlager angebracht sein, wobei die Vorrichtung bezüglich des Körpers derart positionierbar ist, dass der Auslegerarm relativ zu dem Körper um zumindest eine Achse schwenkbeweglich ist, so dass bei einer Rotation des Körpers die Messkugel oder der Auslegerarm in Kontakt mit der Umfangsfläche des Körpers bleiben. Hierbei verläuft die Drehachse des Auslegerarms an dem Drehlager parallel oder quer zur Rotationsachse des Körpers. Dies hat zur Folge, dass der Auslegerarm von oben in Richtung des Körpers abgesenkt werden kann, so dass die Messkugel oder der Auslegerarm in direktem Kontakt mit der Umfangsfläche des Körpers gelangen. Ein solcher Kontakt, der für den Verlauf des Vermessens des Körpers gewährleistet bleiben muss, wird beispielsweise entweder durch das Eigengewicht des Auslegerarms oder durch eine geeignete Vorspannung erzielt, mit der der Auslegerarm um die besagte Schwenkachse an dem Drehlager in Richtung des Körpers beaufschlagt wird.

Zur Durchführung eines Verfahrens gemäß der vorliegenden Erfindung kann der Auslegerarm relativ zu dem Körper um eine Achse, die senkrecht zur Rotationsachse des Körpers verläuft, schwenkbeweglich sein. Hierdurch ist es möglich, dass der Auslegerarm entlang einer Längserstreckung des Körpers verschwenkt wird, um somit die Umfangsfläche des Körpers mit der Messkugel geeignet vermessen zu können. Alternativ hierzu ist es auch möglich, den Auslegerarm am einer Linearführung anzubringen, z.B. mit teleskopischer Funktion, so dass der Auslegerarm und damit auch die Messkugel entlang einer Längsachse des Körpers verfahrbar ist, zwecks einer Vermessung des Körpers entlang seiner gesamten Längserstreckung.

Zur Realisierung eines Verfahrens nach der vorliegenden Erfindung ist eine Vorrichtung, mit der das Verfahren durchführbar ist, mobil einsetzbar, so dass mit der Vorrichtung verschiedene Körper bezüglich ihrer Kontur vermessen oder bezüglich ihrer jeweiligen Lagerung um eine Rotationsachse überprüft werden können. Insbesondere für den Fall von sehr großen Körpern bzw. Messobjekten, die z.B. nicht ohne weiteres oder nur mit großem Aufwand bewegt/transportiert werden können, ist somit eine solche Mobilität einer solchen Vorrichtung von Vorteil.

Nachstehend sind bevorzugte Ausführungsbeispiele der Erfindung anhand einer schematisch vereinfachten Zeichnung näher erläutert. Es zeigen:
- Fig. 1: eine vereinfachte Prinzipdarstellung eines Lasertracker-Systems, das zur Durchführung eines Verfahrens nach der vorliegenden Erfindung eingesetzt wird,
- Fig. 2: eine Querschnittsansicht eines Körpers und einer Messkugel des Lasertracker-Systems von Fig. 1, wobei die Messkugel in Kontakt mit einer Außenumfangsfläche des Körpers ist,
- Fig. 3: eine prinzipiell vereinfachte Seitenansicht einer Vorrichtung, mit der ein Verfahren nach der vorliegenden Erfindung durchführbar ist, wobei an einer Führungseinrichtung eine Messkugel des Lasertracker-Systems von Fig. 1 angebracht ist,
- Fig. 4: eine prinzipiell vereinfachte Seitenansicht einer Vorrichtung gemäß einer weiteren Ausführungsform, mit der ein Verfahren nach der vorliegenden Erfindung durchführbar ist, wobei an einer Führungseinrichtung eine Messkugel des Lasertracker-Systems von Fig. 1 angebracht ist,
- Fig. 5: eine prinzipiell vereinfachte Seitenansicht einer weiteren Ausführungsform Vorrichtung, mit der ein Verfahren nach der vorliegenden Erfindung durchführbar ist,
- Fig. 6: eine prinzipiell vereinfachte Draufsicht auf eine Vorrichtung gemäß der Fig. 3 und 4,
- Fig. 7: eine prinzipiell vereinfachte Draufsicht auf eine Vorrichtung nach einer weiteren Ausführungsform, mit der ein Verfahren nach der vorliegenden Erfindung durchführbar ist,
- Fig. 8: eine prinzipiell vereinfachte Draufsicht auf eine Vorrichtung nach einer weiteren Ausführungsform, mit der ein Verfahren nach der vorliegenden Erfindung durchführbar ist, und
- Fig. 9: eine prinzipiell vereinfachte Perspektivansicht auf eine Vorrichtung nach einer noch weiteren Ausführungsform, mit der ein Verfahren nach der vorliegenden Erfindung durchführbar ist.

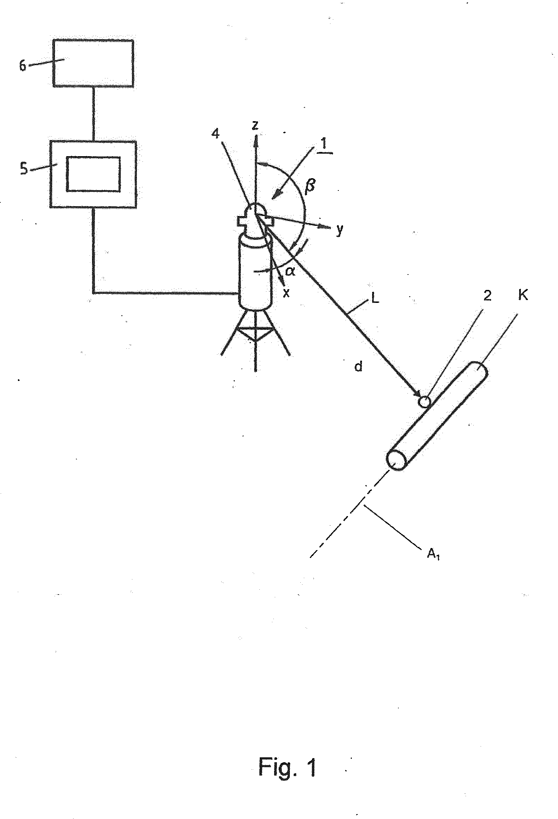

Fig. 1 zeigt prinzipiell vereinfacht ein Lasertracker-System 1, das zur Durchführung eines Verfahrens nach der vorliegenden Erfindung eingesetzt wird. Das Lasertracker-System 1 umfasst eine Messkugel 2, einen Messkopf 4, eine Steuereinrichtung 5 und eine Auswerteeinrichtung 6. Die Messkugel 2 kann mit einer Außenumfangsfläche eines Körpers K in Kontakt gebracht werden, nämlich mittels einer Vorrichtung 10, die nachstehend noch im Detail erläutert ist. Von dem Messkopf wird ein Laserstrahl L ausgesendet, der von der Messkugel 2 eingefangen werden kann und anschließend in Richtung des Messkopfes 4 zurück reflektiert wird. Der Messkopf 4, von dem der Laserstrahl L in Richtung der Messkugel 2 ausgesendet wird, ist signaltechnisch mit der Steuereinrichtung 5 und der Auswerteeinrichtung 6 verbunden, entweder kabelgebunden oder kabellos, z.B. über eine Funkstrecke oder dergleichen. Mittels der Steuereinrichtung 5 wird das Aussenden des Laserstrahls L von dem Messkopf 4 gesteuert bzw. ausgelöst. Mittels der Auswerteeinrichtung 6 können auf Grundlage des von der Messkugel 2 in Richtung des Messkopfes 4 zurück reflektierten Laserstrahls L Messwerte gespeichert und analysiert werden, wodurch auch ein Messprotokoll für eine Aussenkontur des Körpers K oder dessen Lagerung um eine Achse erstellt werden kann.

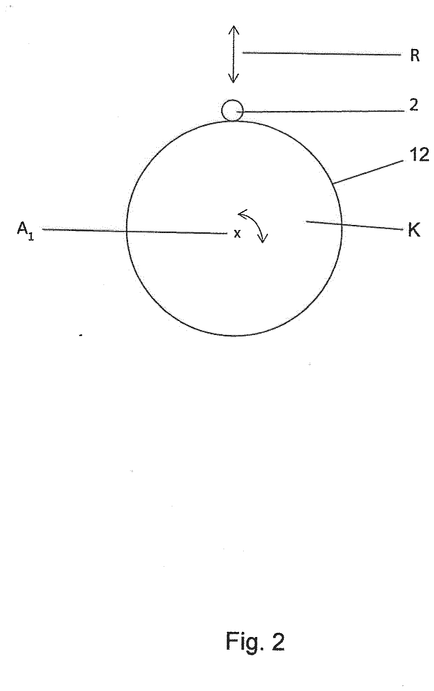

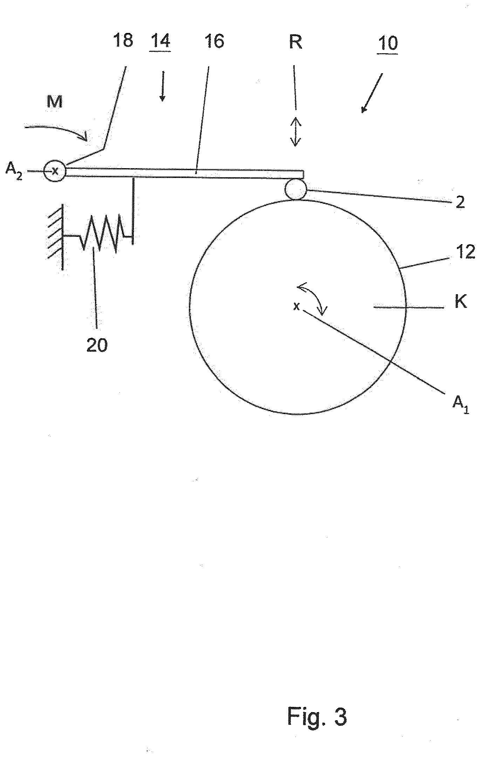

Der Laserstrahl L bildet einen Messstrahl und dient zur Messung eines Abstandes d sowie der horizontalen und vertikalen Raumwinkel α und β zwischen dem als Referenzposition dienenden Messkopf 4 und der Messkugel 2, die einen speziellen Reflektor zur Reflektion des Laserstrahls L in Richtung des Messkopfes 4 aufweist. Zur Durchführung einer Vermessung der Aussenkontur des Körpers K oder zur Überprüfung von dessen Lagerung um eine Rotationsachse wird die Messkugel 2 mittels der Vorrichtung 10 unmittelbar (Fig. 3) mit einer Außenumfangsfläche des Körpers in Kontakt gebracht, währenddessen der Körper K um eine Rotationsachse A₁ (Fig. 2) in Rotation versetzt wird.

Durch eine Kombination aus Winkelmessung und interferometrischer Laser-Distanzmessung können entsprechend die 3D-Punktkoordinaten der Messkugel 2 erfasst werden. Das Lasertracker-System 1 funktioniert dabei beispielsweise so, dass die Messkugel 2 mit dem Laserstrahl L angezielt wird, wobei der Messkopf 4 dann die beiden Winkel a, β in senkrecht zueinander liegenden Ebenen misst und die Distanz d zu der Messkugel 2, die in Kontakt mit dem Körper K gebracht ist, bestimmt. Hierbei entsprechen die drei genannten Messresultate (zwei Winkel und der Abstand d zwischen dem Messkopf 4 und der Messkugel 2) den Polarkoordinaten der Messkugel 2 im Polarkoordinatensystem des Lasertracker-Systems 1. Diese Polarkoordinaten können dann in kartesische (rechtwinklige) Koordinaten umgerechnet werden.

Bei dem Körper K, dessen Aussenkontur oder Lagerung um die Rotationsachse A₁ unter Verwendung des Lasertracker-Systems 1 von Fig. 1 vermessen bzw. überprüft wird, kann es sich beispielsweise um eine Segmentrolle einer Stranggießanlage handeln. Im Allgemeinen darf darauf hingewiesen werden, dass ein Körper K, dessen Aussenkontur mit einem Verfahren und einer Vorrichtung nach der vorliegenden Erfindung vermessen wird, vorzugsweise um zumindest eine Achse rotationssymmetrisch ist. Fig. 2 verdeutlicht eine Querschnittsansicht einer solchen Segmentrolle, wobei die Achse, um die die Segmentrolle rotationssymmetrisch ist und während ihrer Vermessung in Rotation versetzt wird, mit A₁ bezeichnet ist. Ergänzend darf an dieser Stelle darauf hingewiesen werden, dass der Körper bzw. die Segmentrolle, der bzw. die mittels der vorliegenden Erfindung bezüglich der Aussenkontur bzw. bezüglich ihrer Lagerung um eine Rotationsachse überprüft werden, auch nicht rotationssymmetrisch sein können, oder aber im Falle einer Symmetrie um eine Achse dann jedoch um eine Rotationsachse, die von der Symmetrieachse verschieden ist, in Rotation versetzt bzw. gedreht werden.

In der Fig. 2 ist schematisch vereinfacht eine Messkugel 2 des Lasertracker-Systems 1 von Fig. 1 gezeigt, die in Kontakt mit einer Außenumfangsfläche 12 des Körpers K gebracht ist. Durch den Pfeil R ist eine mögliche Bewegungsrichtung für die Messkugel 2 angedeutet, nämlich radial zu dem Körper K in Form einer Segmentrolle, wodurch die Messkugel der Außenumfangsfläche 12 des Körpers K bei dessen Rotation um die Rotationsachse A₁ nachfolgen kann.

Nachfolgend sind unter Bezugnahme auf die Fig. 3 bis 9 bevorzugte Ausführungsformen einer Vorrichtung 10 erläutert, mit der sich zur Durchführung eines erfindungsgemäßen Verfahrens eine Messkugel 2 des Lasertracker-Systems 1 von Fig. 1 bezüglich eines Körpers K positionieren lässt, um dessen Aussenkontur zu vermessen oder dessen Lagerung um eine Rotationsachse zu überprüfen.

Fig. 3 zeigt eine prinzipiell vereinfachte Seitenansicht einer ersten Ausführungsform einer Vorrichtung 10, die zur Durchführung eines erfindungsgemäßen Verfahrens dient. Die Vorrichtung 10 umfasst eine Führungseinrichtung 14 mit einem Auslegerarm 16. An einem freien Ende des Auslegerarms 16 kann eine Messkugel 2 eines Lasertracker-Systems 1 von Fig. 1 angebracht werden. Der Auslegerarm 16 ist mit seinem entgegensetzten Ende an einem Drehlager 18 angebracht, und mittels dieses Drehlagers 18 um eine Achse A₂ schwenkbeweglich gelagert. Hierdurch kann das freie Ende des Auslegerarms 16 in Richtung des Pfeils R bewegt werden. Die Bedeutung dieser Beweglichkeit in Richtung des Pfeils R ist nachfolgend noch im Detail erläutert.

Das Drehlager 18 der Vorrichtung 10 ist an einer (nicht gezeigten) Rahmeneinrichtung oder dergleichen vorgesehen. Die Vorrichtung 10 kann bezüglich eines zu vermessenden Körpers K positioniert werden, derart, dass der Auslegerarm 16 sich mit seinem freien Ende und der daran angebrachten Messkugel 2 oberhalb des Körpers K befindet. Hierbei kann dann der Auslegerarm 16 derart um die Achse A₂ geschwenkt werden, dass die Messkugel 2 in Kontakt mit der Außenumfangsfläche 12 des Körpers K gelangt. Ausweislich der Darstellung von Fig. 3 kann die Achse A₂, um die wie erläutert der Auslegerarm 16 verschwenkbar ist, parallel zur Rotationsachse A₁ verlaufen. Das Eigengewicht des Auslegerarms 16 gewährleistet bei einer Drehung des Körpers K um die Rotationsachse A₁ einen fortdauernden Kontakt der Messkugel 2 mit der Außenumfangsfläche 12 des Körpers K. Dieser Kontakt kann weiter dadurch verbessert werden, dass auf den Auslegerarm 16 eine Vorspannung in Richtung des Körpers K ausgeübt wird, beispielsweise mittels einer Feder 20, durch die ein Moment M um die Achse A₂ auf den Auslegerarm 16 in Richtung des Körpers K ausgeübt wird. Diesbezüglich darf darauf hingewiesen werden, dass die Feder 20 in der Fig. 3 prinzipiell stark vereinfacht dargestellt ist, und abweichend von dieser Darstellung auch in das Drehlager 18 integriert sein kann, um die besagte Vorspannung für den Auslegerarm 16 zu erzeugen.

Die Erfindung funktioniert nun wie folgt:
Die Vorrichtung 10 wird bezüglich des Körpers K derart positioniert, dass deren Auslegerarm 16 mit seinem freien Ende, an dem die Messkugel 2 des Lasertracker-Systems 1 von Fig. 1 angebracht ist, sich oberhalb des Körpers K befindet. Anschließend wird der Auslegerarm 16 um die Achse A₂ des Drehlagers 18 in Richtung des Körpers K verschwenkt, so dass die Messkugel 2 in Kontakt mit der Außenumfangsfläche 12 des Körpers K gelangt, wobei dann der Körper K um die Rotationsachse A₁ in Rotation versetzt wird. Das Rotieren des Körpers K um die Rotationsachse A₁ kann zweckmäßigerweise maschinentechnisch erfolgen, beispielsweise über motorisch angetriebene Reibrollen oder dergleichen, die in Kontakt mit der Außenumfangsfläche 12 des Körpers K gebracht werden. Außenumfangsfläche.

Während der Rotation des Körpers K um die Rotationsachse wird von dem Messkopf 4 des Lasertracker-Systems 1 ein Laserstrahl L auf die Messkugel 2 gerichtet, wobei dann dieser Laserstrahl L in Richtung des Messkopfs 4 zurück reflektiert wird. Falls der Körper K z.B. eine Unwucht aufweisen sollte, beispielsweise bei einer Segmentrolle in Form eines sogenannten Rollenschlags, wird die Messkugel 2 in Richtung des Pfeils R auf- und abbewegt. Diese Bewegung der Messkugel 2 kann von der Auswerteeinrichtung 6 erfasst und ausgewertet werden, um einen Rückschluss auf mögliche Unebenheiten an der Außenumfangsfläche des Körpers K zu gewinnen. Ergänzend wird darauf hingewiesen, dass eine gemessene Bewegung der Messkugel 2, die während der Rotation des Körpers K in Kontakt mit dessen Außenumfangsfläche 12 ist, auch andere Ursachen haben kann, z.B. einen Lagerschaden im Bereich der Rotationsachse A₁, eine Verbiegung des Körpers K entlang seiner Längsachse oder dergleichen. Jedenfalls ist durch die Erfindung ein Vermessen der Kontur des Körpers K und/oder eine Überprüfung von dessen Lagerung um die Rotationsachse A₁ möglich.

Im Verlauf des obigen Vermessens der Außenumfangsfläche 12 des Körpers K und bei dessen Rotation um die Rotationsachse A₁ ist von großer Bedeutung, dass die Messkugel 2 fortwährend in Kontakt mit der Außenumfangsfläche 12 bleibt. Dies wird durch die Schwenkbeweglichkeit des Auslegerarms 16 um die Achse A₂ mittels des Drehlagers 18 gewährleistet, ggf. in Verbindung mit der Vorspannung, die durch die Feder 20 auf den Auslegerarm 16 ausgeübt wird.

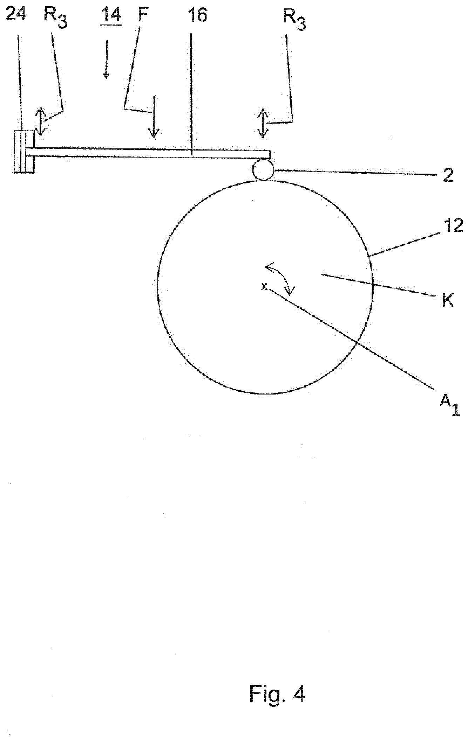

Fig. 4 zeigt die Vorrichtung 10 nach einer weiteren Ausführungsform, in einer prinzipiell vereinfachten Seitenansicht. Im Unterschied zur Ausführungsform von Fig. 3 ist hierbei der Auslegerarm 16 der Führungseinrichtung 14 an einem Linear-Führungslager 24 angebracht, wodurch eine Beweglichkeit des Auslegerarms 16 bezüglich des Körpers K gewährleistet ist, ausweislich der Pfeile R₃ von Fig. 4. Ein fortwährender Kontakt der Messkugel 2 mit der Außenumfangsfläche 12 des Körpers K bei dessen Rotation um die Rotationsachse A₁ kann, in Ergänzung zu einem Eigengewicht des Auslegerarms 16, auch durch eine Kraft F gewährleistet sein, mit der der Auslegerarm 16 in Richtung des Körpers K vorgespannt ist. Diesbezüglich können innerhalb des Linear-Führungslagers 24 (nicht gezeigte) Federn oder dergleichen vorgesehen sein, um eine solche Vorspannung zu gewährleisten. Im Übrigen entspricht das Funktionsprinzip der Ausführungsform von Fig. 4 jenem der Ausführungsform von Fig. 3, so dass zur Vermeidung von Wiederholungen darauf verwiesen werden darf.

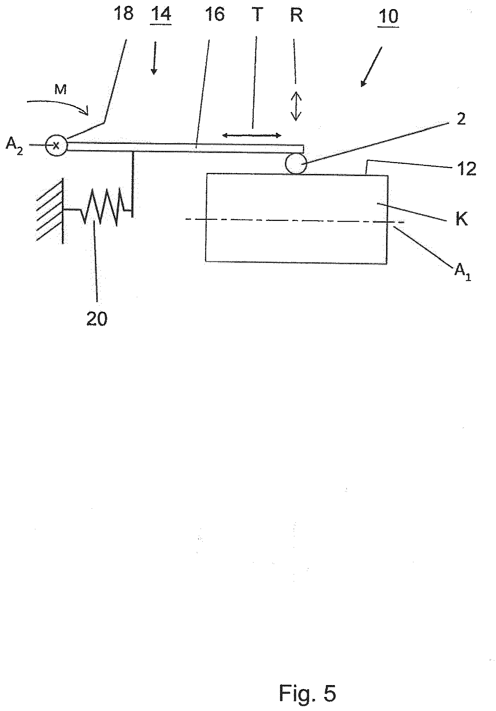

Fig. 5 zeigt eine prinzipiell vereinfachte Seitenansicht einer Vorrichtung 10 nach einer weitere Ausführungsform, ähnlich zu Fig. 3. In Abweichung von Fig. 3 ist der Körper K relativ zur Vorrichtung 10 um 90° gedreht, so dass die Achse A₂, um die der Auslegerarm 16 zum Nachfolgen der Außenumfangsfläche 12 während der Rotation des Körpers K um die Rotationsachse A₁ verschwenkt werden kann, senkrecht zur Rotationsachse A₁ verläuft.

Die Darstellung von Fig. 5 verdeutlicht weiter, dass der Auslegerarm 16 in seiner Länge verändert werden kann, z.B. durch eine Teleskop-Funktion, was hier durch den Pfeil "T" symbolisiert ist. Entsprechend kann der Körper K bei einer Veränderung des Auslegerarms 16 in seiner Länge von der Messkugel 2 entlang seiner gesamten Länge abgetastet werden.

Im Übrigen entspricht die Funktionsweise der Ausführungsform von Fig. 5 umfassend der Ausführungsform von Fig. 3, so dass zur Vermeidung von Wiederholungen darauf verwiesen werden darf.

In Bezug auf die obigen Ausführungsformen gemäß der Fig. 3-5 darf darauf verwiesen werden, dass der Auslegerarm 16 - in Abweichung von den gezeigten Darstellungen - auch derart bezüglich des Körpers K positioniert werden kann, dass die daran angebrachte Messkuget 2 den Körper K von einer beliebigen Richtung her kontaktiert. Eine Kontaktierung von unten her entspricht dann einer Messung "über Kopf". Bei dieser alternativen Anordnung des Auslegerarms 16 bezüglich des Körpers K ist dann wesentlich, dass z.B. mittels der Feder 20 auf den Auslegerarm 16 eine geeignete Vorspannung ausgeübt wird, um dadurch ein Verschwenken des Auslegerarms 16 um die Achse A₂ und somit Nachfolgen der Kontur 12 des Körpers K durch die Messkugel 2 zu gewährleisten, während der Körper K sich um die Rotationsachse A₁ dreht.

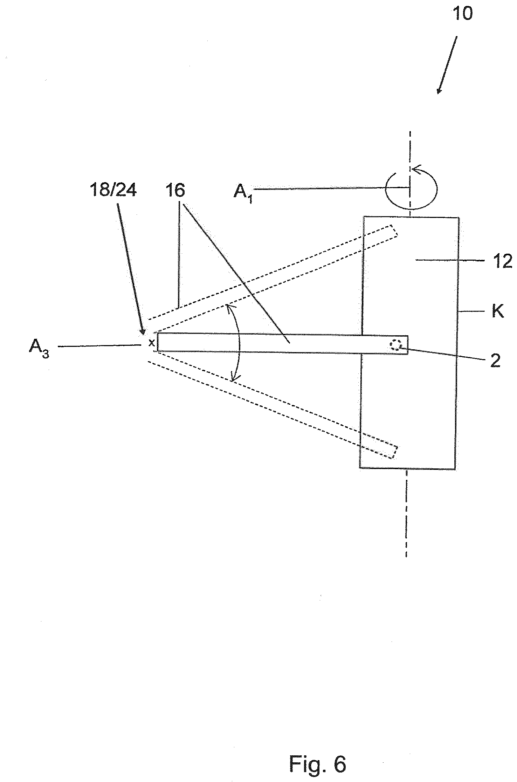

Fig. 6 zeigt eine prinzipiell vereinfachte Draufsicht auf die Ausführungsformen gemäß der Fig. 3-4. Hieraus ist ersichtlich, dass der Auslegerarm um eine Achse A₃ verschwenkt werden kann, wobei diese Achse A₃ senkrecht zu der Rotationsachse A₁ des Körpers K verläuft. Durch eine solche Verschwenkbarkeit des Auslegerarms 16 um die Achse A₃ ist es möglich, den Körper K, beispielsweise eine Segmentrolle einer Stranggießanlage, entlang ihrer Längsrichtung abzutasten, so dass damit die Außenkontur des Körpers K auch vollständig in Längsrichtung vermessen werden kann.

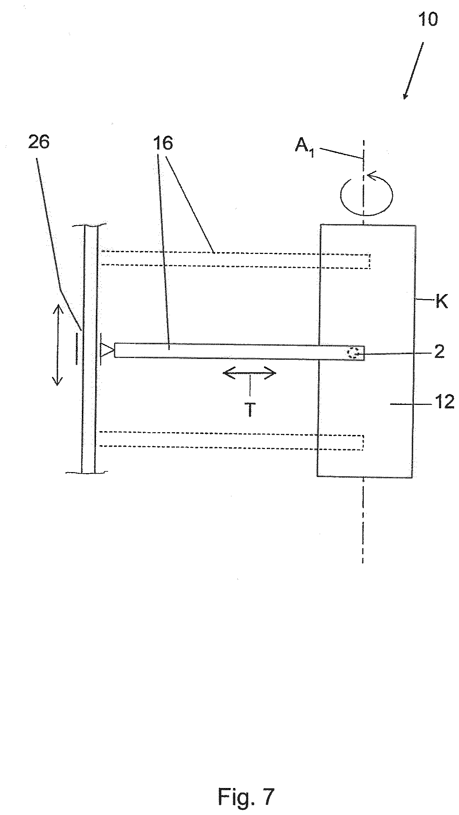

Fig. 7 zeigt eine prinzipiell vereinfachte Draufsicht auf eine weitere Ausführungsform der Vorrichtung 10, in Abwandlung zur Ausführungsform von Fig. 6. Bei der Ausführungsform gemäß Fig. 7 ist der Auslegerarm 16 an einem Linear-Führungslager 26 geführt, derart, dass der Auslegerarm 16 dadurch entlang der Längsachse des Körpers K bzw. der Rotationsachse A₁ beweglich ist. Hierdurch ist es möglich, während einer Rotation des Körpers K um die Rotationsachse A₁ eine gesamte Länge des Körpers K zu erfassen, nämlich durch einen entsprechenden Kontakt mit der an dem Auslegerarm 16 angebrachten Messkugel 2. Des Weiteren ist es möglich, den Auslegerarm 16 teleskopisch - in Fig. 7 symbolisch durch den Pfeil "T" angedeutet - in seiner Länge zu verändern. Dies ist z.B. bei einer Anpassung der Vorrichtung 10 an verschieden große Körper K von Vorteil ist, weil dabei die Vorrichtung 10 als solche an ihrer gewählten Aufstell- bzw. Aufstandsposition verbleiben kann.

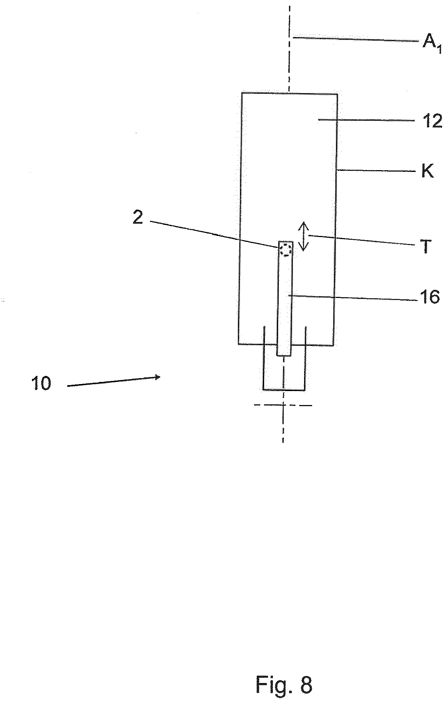

Fig. 8 zeigt eine weitere Modifikation für den Auslegerarm 16, der teleskopisch in seiner Längsrichtung veränderlich ist. Diese Funktion ist in der Fig. 8 durch den Pfeil "T" symbolisiert. Eine solche teleskopartige Verschieblichkeit des Auslegerarms 16 kann beispielsweise in Längsrichtung des Körpers K bzw. entlang der Rotationsachse A₁ erfolgen.

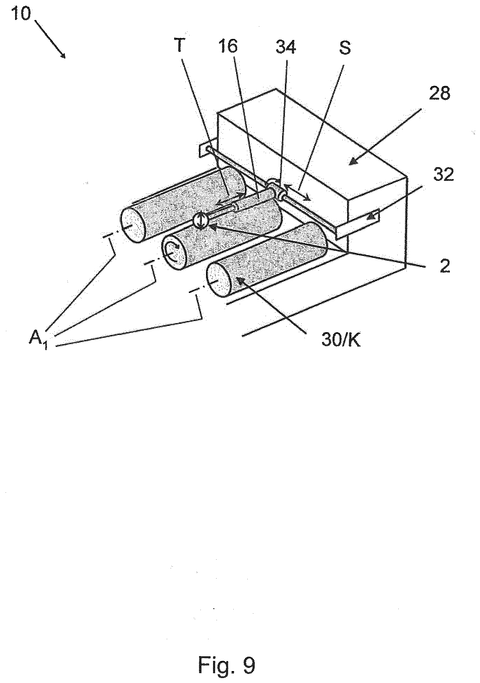

Fig. 9 zeigt eine weitere Ausführungsform einer Vorrichtung 10, die zur Durchführung eines erfindungsgemäßen Verfahrens dient, in einer vereinfachten Perspektivansicht. Hierbei sind an einem Segmentrahmen 28 beispielsweise drei Rollen 30 gelagert angebracht, wobei diese Rollen 30 dem Körper K in den Darstellungen der Fig. 2-8 entsprechen. An dem Segmentrahmen 28 ist eine Befestigungseinrichtung 32 vorgesehen, an der ein Schlitten 34 verschieblich angebracht ist. Der Pfeil "S" in Fig. 9 verdeutlicht eine seitliche Verschieblichkeit dieses Schlittens 34. An dem Schlitten 34 ist ein Auslegerarm 16 nach der Vorrichtung 10 angebracht, wobei dieser Auslegerarm 16 - symbolisiert durch das Bezugszeichen "T" - teleskopartig in seiner Länge veränderlich ist. An einem freien Ende des Auslegerarms 16 ist eine Messkugel 2 des Lasertracker-Systems 1 angebracht.

Die Ausführungsform gemäß Fig. 9 funktioniert nach dem gleichen Prinzip wie die zuvor erläuterten Ausführungsformen. Während der Rotation einer Rolle 30 um die Rotationsachse A₁ ist der Auslegerarm 16 bezüglich einer Außenumfangsfläche der Rolle 30 derart positioniert, dass die daran angebrachte Messkugel 2 der Außenumfangsfläche nachfolgt. Während des Vermessens von einer Kontur einer Rolle 30 bzw. beim Überprüfen von deren Lagerung um die zugeordnete Rotationsachse A₁ ist es möglich, die Länge des Auslegerarms 16 mittels seiner Teleskopfunktion zu verändern, um dadurch mit der Messkugel 2 die gesamte Länge der Rolle 30 zu erfassen.

Bei der Ausführungsform von Fig. 9 kann das Vermessen bzw. Überprüfen von einer Rolle zu einer benachbarten anderen Rolle 30 dadurch eingestellt werden, dass der Schlitten 34 seitlich in der Richtung S verfahren wird, wonach dann die an dem Auslegerarm 16 angebrachte Messkugel 2 erneut in Kontakt mit einer Außenumfangsfläche der benachbarten Rolle 30 gebracht wird.

Für ein Verschwenken des Auslegerarms 16 um die Achse A₃ (Fig. 6) und/oder ein Verschieben bzw. Verlagern des Auslegerarms 16 in Längsrichtung des Körpers (Fig. 7, Fig. 8, Fig. 9) können (nicht gezeigte) motorische Mittel oder dergleichen vorgesehen sein, die von der Steuereinrichtung 5 angesteuert werden können. Zweckmäßigerweise erfolgt ein solches Ansteuern während des Vermessens der Kontur des Körpers K automatisch, wobei das Messprotokoll im Hinblick auf die jeweiligen Positionen des Auslegerarms 16 bezüglich der Achse A₃ entsprechend vervollständigt wird.

In gleicher Weise können mittels der Steuereinrichtung 5 auch (nicht gezeigte) motorische Mittel angesteuert werden, um den Auslegerarm 16 um die Achse A₂ zu verschwenken, und dadurch die Messkugel 2 in Kontakt mit der Außenumfangsfläche 12 des Körpers K zu bringen bzw. davon abzuheben.

In Abwandlung von den Darstellungen gemäß der Fig. 1 bis 9 darf darauf hingewiesen werden, das es mit einem Verfahren gemäß der vorliegenden Erfindung auch möglich ist, hohle Körper, z.B. in Form eines hohlen Rohrs oder einer hohlen Rolle, zu untersuchen, wobei die Messkugel 2 dabei in Kontakt mit einer Innenumfangsfläche eines solchen Körpers gebracht werden kann.

Eine vollständige Vermessung einer Kontur des Körpers K, nämlich an dessen Umfangsfläche 12, gemäß der vorliegenden Erfindung ermöglicht beispielsweise im Fall einer Segmentrolle eine vollautomatische Rollenschlagmessung unter Verwendung eines Lasertracker-Systems, wobei eine solche lasergestützte Rollenschlagmessung neben einem erheblichen Zeitgewinn auch zu den Vorteilen eines automatischen Generierens eines Messprotokolls und einer verbesserten Messgenauigkeit im Vergleich zu herkömmlichen mechanischen Messmitteln führt.

Schließlich darf darauf hingewiesen werden, dass alle Darstellung in der Zeichnung prinzipiell vereinfacht und insbesondere ohne Maßstab zu verstehen sind.

## Patentansprüche

1. Verfahren zum Vermessen der Kontur eines Körpers (K), bei dem ein Lasertracker-System (1) mit einer Messkugel (2), einem Messkopf (3) und einer Auswerteeinrichtung (6) eingesetzt wird, wobei der Körper (K) um zumindest eine Rotationsachse (A₁) in Rotation versetzt wird und dabei die Messkugel (2) einer Umfangsfläche (12) des Körpers (K) nachfolgt, wobei ein Laserstrahl (L) von der Messkugel (2) zurück zu dem Messkopf (3) reflektiert und auf Grundlage dessen mittels der Auswerteeinrichtung (6) die Kontur des Körpers (K) bestimmt wird,
**dadurch gekennzeichnet,**
**dass** die Messkugel (2) sich mit der Umfangsfläche (12) des Körpers (K) unmittelbar in Kontakt befindet, um der Umfangsfläche (12) des Körpers (K) bei dessen Rotation nachzufolgen.

2. Verfahren zum Überprüfen der Lagerung eines Körpers (K) um eine Rotationsachse (A₁), bei dem ein Lasertracker-System (1) mit einer Messkugel (2), einem Messkopf (3) und einer Auswerteeinrichtung (6) eingesetzt wird,
wobei der Körper (K) um die Rotationsachse (A₁) in Rotation versetzt wird und dabei die Messkugel (2) einer Umfangsfläche (12) des Körpers (K) nachfolgt, wobei ein Laserstrahl (L) von der Messkugel (2) zurück zu dem Messkopf (3) reflektiert und auf Grundlage dessen mittels der Auswerteeinrichtung (6) die Lagerung des Körpers (K) um die Rotationsachse (A₁) bestimmt wird,
**dadurch gekennzeichnet,**
**dass** die Messkugel (2) sich mit der Umfangsfläche (12) des Körpers (K) unmittelbar in Kontakt befindet, um der Umfangsfläche (12) des Körpers (K) bei dessen Rotation nachzufolgen.

3. Verfahren nach Anspruch 1 oder 2, **dadurch gekennzeichnet, dass** die Messkugel (2) an einer Führungseinrichtung (14) mit einem Auslegerarm (16) angebracht ist, wobei der Auslegerarm (16) relativ zu dem Körper (K) beweglich gelagert ist.

4. Verfahren nach Anspruch 3, **dadurch gekennzeichnet, dass** der Auslegerarm (16) in Richtung des Körpers (K) mit einer Kraft (F) beaufschlagt wird, so dass die Messkugel (2) oder der Auslegerarm (16) bei einer Rotation des Körpers (K) um die Rotationsachse (A₁) in Kontakt mit dem Körper (K) bleiben, vorzugsweise, dass der Auslegerarm (16) in Richtung des Körpers (K) vorgespannt ist.

5. Verfahren nach Anspruch 3 oder 4, **dadurch gekennzeichnet, dass** eine Positionierung des Auslegerarms (16) relativ zum Körper (K), während der Körper (K) um die Rotationsachse (A₁) rotiert und dabei die Messkugel (2) einer Umfangsfläche (12) des Körpers (K) nachfolgt, automatisch verstellt wird.

6. Verfahren nach Anspruch 5, **dadurch gekennzeichnet, dass** die Verstellung der Positionierung des Auslegerarms (16) relativ zum Körper (K) um eine Achse (A₂) parallel oder quer zur Rotationsachse (A₁), oder translatorisch in einer Richtung parallel zur Rotationsachse (A₁), vorzugsweise teleskopisch, erfolgt.

7. Verfahren nach einem der Ansprüche 1 bis 6, **dadurch gekennzeichnet, dass** der Körper (K) um die Rotationsachse (A₁) maschinentechnisch in Rotation versetzt wird.

8. Verfahren nach einem der Ansprüche 1 bis 7, **dadurch gekennzeichnet, dass** ein Messprotokoll für den Körper (K) in Bezug auf verschiedene Abschnitte seiner Außenumfangsfläche (12) automatisch erstellt wird.

## Claims

1. Method for measuring the contour of a body (K), in which a laser tracker system (1) with a measuring ball (2), a measuring head (3) and an evaluating device (6) is used, wherein the body (K) is set in rotation about at least one axis (A₁) of rotation and in that case the measuring ball (2) follows a circumferential surface (12) of the body (K), wherein a laser beam (L) is reflected by the measuring ball (2) back to the measuring head (3) and on the basis thereof the contour of the body (K) is determined by means of the evaluating device (6),
**characterised in that**
the measuring ball (2) is disposed directly in contact with the circumferential surface (12) of the body (K) so as to follow the circumferential surface (12) of the body (K) during rotation thereof.

2. Method for checking the position of a body (K) about an axis (A₁) of rotation, in which a laser tracker system (1) with a measuring ball (2), a measuring head (3) and an evaluating device (6) is used, wherein the body (K) is set in rotation about the axis (A₁) of rotation and in that case the measuring ball (2) follows a circumferential surface (123) of the body (K) and wherein a laser beam (L) is reflected by the measuring ball (2) back to the measuring head (3) and on the basis thereof the position of the body (K) about the axis (A₁) of rotation is determined by means of the evaluating device (6),
**characterised in that**
the measuring ball (2) is disposed in direct contact with the circumferential surface (12) of the body (K) so as to follow the circumferential surface (12) of the body (K) during rotation thereof.

3. Method according to claim 1 or 2, **characterised in that** measuring ball (2) is mounted at a guide device (14) with a cantilever arm (16), wherein the cantilever arm (16) is mounted to be movable relative to the body (K).

4. Method according to claim 3, **characterised in that** the cantilever arm (16) is acted on in the direction of the body (K) by a force (F) so that the measuring ball (2) or the cantilever arm (16) during rotation of the body (K) about the axis (A₁) of rotation remains in contact with the body (K), preferably that the cantilever arm (16) is biased in the direction of the body (K).

5. Method according to claim 3 or 4, **characterised in that** a positioning of the cantilever arm (16) relative to the body (K) is automatically adjusted while the body (K) rotates about the axis (A₁) of rotation and **in that** case the measuring ball (2) follows a circumferential surface (12) of the body (K).

6. Method according to claim 5, **characterised in that** the adjustment of the positioning of the cantilever arm (16) relative to the body (K) is carried out, preferably telescopically, about an axis (A₂) parallel or transversely to the axis (A₁) of rotation or translationally in a direction parallel to the axis (A₁) of rotation.

7. Method according to any one of claims 1 to 6, **characterised in that** the body (K) is set in rotation about the axis (A₁) of rotation by machine.

8. Method according to any one of claims 1 to 7, **characterised in that** a measurement log for the body (K) with respect to different sections of the circumferential surface (12) thereof is automatically created.

## Revendications

1. Procédé pour la mesure du contour d'un corps (K) dans lequel on met en oeuvre un système de localisation par laser (1) comprenant une boule de mesure (2), une tête de mesure (3) et un mécanisme d'évaluation (6) ; dans lequel le corps (K) est mis en rotation autour d'au moins un axe de rotation (A₁) et au cours de cette mise en rotation, la boule de mesure (2) suit une surface périphérique (12) du corps (K) ; dans lequel un faisceau laser (L) est réfléchi en retour depuis la boule de mesure (2) en direction de la tête de mesure (3) et, sur base de ladite réflexion, au moyen du mécanisme d'évaluation (6), le contour du corps (K) est déterminé ; **caractérisé en ce que** la boule de mesure (2) est placée directement en contact avec la surface périphérique (12) du corps (K) dans le but de suivre la surface périphérique (12) du corps (K) lors de la rotation de ce dernier.

2. Procédé pour la vérification du positionnement d'un corps (K) autour d'un axe de rotation (A₁) dans lequel on met en oeuvre un système de localisation par laser (1) comprenant une boule de mesure (2), une tête de mesure (3) et un mécanisme d'évaluation (6) ; dans lequel le corps (K) est mis en rotation autour de l'axe de rotation (A₁) et au cours de cette mise en rotation, la boule de mesure (2) suit une surface périphérique (12) du corps (K) ; dans lequel un faisceau laser (L) est réfléchi en retour depuis la boule de mesure (2) en direction de la tête de mesure (3) et, sur base de ladite réflexion, au moyen du mécanisme d'évaluation (6), le contour du corps (K) est déterminé ; **caractérisé en ce que** la boule de mesure (2) est placée directement en contact avec la surface périphérique (12) du corps (K) dans le but de suivre la surface périphérique (12) du corps (K) lors de la rotation de ce dernier.

3. Procédé selon la revendication 1 ou 2, **caractérisé en ce que** la boule de mesure (2) vient s'appliquer contre un mécanisme de guidage (14) comprenant un bras en porte-à-faux (16) ; dans lequel le bras en porte-à-faux (16) est monté en mobilité par rapport au corps (K).

4. Procédé selon la revendication 3, **caractérisé en ce que** le bras en porte-à-faux (16) est sollicité, dans la direction du corps (K), avec une force (F) d'une manière telle que la boule de mesure (2) ou le bras en porte-à-faux (16), lors d'une rotation du corps (K) autour de l'axe de rotation (A₁) reste en contact avec le corps (K), de préférence d'une manière telle que le bras en porte-à-faux (16) reste en état de précontrainte dans la direction du corps (K).

5. Procédé selon la revendication 3 ou 4, **caractérisé en ce qu'**un positionnement du bras en porte-à-faux (16) par rapport au corps (K), pendant que le corps (K) effectue des rotations autour de l'axe de rotation (A₁) et que par là-même, la boule de mesure (2) suit une surface périphérique (12) du corps (K), fait l'objet d'un déplacement d'une manière automatique.

6. Procédé selon la revendication 5, **caractérisé en ce que** le déplacement du positionnement du bras en porte-à-faux (16) par rapport au corps (K) a lieu autour d'un axe (A₂) parallèlement ou en direction transversale par rapport à l'axe de rotation (A₁) ou par translation dans une direction parallèle à l'axe de rotation (A₁), de préférence de manière télescopique.

7. Procédé selon l'une quelconque des revendications 1 à 6, **caractérisé en ce que** le corps (K) est mis en rotation autour de l'axe de rotation (A₁) d'une manière mécanique.

8. Procédé selon l'une quelconque des revendications 1 à 7, **caractérisé en ce qu'**un protocole de mesure pour le corps (K) est établi de manière automatique par rapport à différentes parties de sa surface périphérique externe (12).
